# EUROPEAN PATENT APPLICATION

(11) **EP 3 382 397 A1**
(43) Date of publication of application: **03.10.2018**
(21) Application number: 17163984.2
(22) Date of filing: 30.03.2017
(51) Int. Cl.: G01N 35/02, B65G 54/02, G01N 35/04

(54) **LABORATORY SAMPLE DISTRIBUTION SYSTEM AND LABORATORY AUTOMATION SYSTEM**

(71) Applicant: Roche Diagnostics GmbH, 68305 Mannheim (DE); F. Hoffmann-La Roche AG, 4070 Basel (CH)
(72) Inventor: Sinz, Achim, 71332 Waiblingen (DE)
(74) Representative: Patentanwälte Ruff, Wilhelm, Beier, Dauster & Partner mbB

(57) **Abstract**

Laboratory sample distribution system (100), comprising
- a number of sample container carriers (140),
- a number of transport modules (101, 102, 103), wherein each transport module (101, 102, 103) comprises
- a transport surface (111, 112, 113) being adapted to carry the sample container carriers (140), and
- electrical drive means (120) being adapted to move the sample container carriers (140) on top of the transport surface (111, 112, 113),

- a power supply module (160) being adapted to provide electrical power to the transport modules (101, 102, 103), and
- a number of control devices (150, 151, 152, 153),
- wherein at least one of the control devices (150, 151, 152, 153) is configured to control the movement of the sample container carriers (140) on top of the transport surfaces (111, 112, 113) by driving the electrical drive means (120) such that the sample container carriers (140) move along corresponding transport paths, and
- wherein at least one of the control devices (150, 151, 152, 153) is configured to limit the number of simultaneously moving sample container carriers (140) to a predetermined maximum number.

## Description

### Applicable field and prior art

The invention relates to a laboratory sample distribution system and to a laboratory automation system comprising a laboratory sample distribution system.

Known laboratory sample distribution systems are typically used in laboratory automation systems in order to transport samples contained in sample containers between different laboratory stations.

A typical laboratory sample distribution system is disclosed in document WO 2013/064656 A1. Such a laboratory sample distribution system provides for a high throughput and for a reliable operation. The laboratory sample distribution system comprises a plurality of transport modules each being adapted to simultaneously move a number of sample container carriers.

### Object and solution

It is an object of the invention to provide for a laboratory sample distribution system that is optimized with respect to the prior art. It is a further object of the invention to provide for a laboratory automation system comprising such a laboratory sample distribution system.

This object is solved by a laboratory sample distribution system according to claim 1 and by a laboratory automation system according to claim 10.

The invention relates to a laboratory sample distribution system.

The laboratory sample distribution system comprises a number of sample container carriers.

The laboratory sample distribution system further comprises a number (e.g. 2 to 1000) of transport modules, wherein each transport module comprises a transport surface (may also be denoted as transport plane) being adapted to carry/support the sample container carriers, and electrical drive means being adapted to move the sample container carriers on top of the transport surface.

The laboratory sample distribution system further comprises a power supply module being adapted to provide electrical power to the transport modules. The power supply module may e.g. be embodied as a mains adapted. The power supply module may be adapted to generate a DC voltage having a suitable voltage level, e.g. lying between 5V and 48 V, based on a mains voltage. The power supply module may have a nominal power.

The laboratory sample distribution system further comprises a number (e.g. 1 to 1000) of control devices. At least one of the control devices or exactly one control device is configured to control the movement of the sample container carriers on top of the transport surfaces by driving the electrical drive means such that the sample container carriers move along corresponding and individual transport paths. At least one of the control devices or exactly one control device is configured to limit the number of simultaneously moving sample container carriers to a predetermined maximum number, e.g. such that the nominal power of the power supply module is not exceeded.

The laboratory sample distribution system may comprise only one control device. Such an implementation allows for integration of both steering functions for the sample container carriers and power control or control of the number of simultaneously moving sample container carriers in one common control device.

By means of the inventive laboratory sample distribution system, the number of simultaneously moving sample container carriers is limited to the predetermined maximum number. Thus, the combined maximum power consumption of the transport modules is limited. The predetermined maximum number accounts for typical use scenarios of the laboratory sample distribution system. By empirical studies it has been found that the likelihood that the predetermined maximum number is exceeded is small. Thus dimensioning the power supply module for these unlikely cases is not economic. By means of the invention the power supply module may be dimensioned in its nominal power such that the typical use scenarios are covered. Thus, over dimensioning of the power supply module can be avoided.

The sample containers are typically designed as tubes made of glass or transparent plastic and typically have an opening at an upper end. The sample containers can be used to contain, store and transport samples such as blood samples or chemical samples.

The transport surface supports the sample container carriers, what can also be denoted as carrying the sample container carriers.

The control device is typically embodied as a microprocessor, a microcontroller, a field programmable gate array, a standard computer, or a similar device. In a typical embodiment, the control device comprises processor means and storage means, wherein program code is stored in the storage means in order to control the behavior of the processor means when the program code is executed on the processor means.

The sample container carriers are typically adapted to move in two dimensions on/over the transport surface.

According to an embodiment, the predetermined maximum number is set according to a maximum electrical power or nominal power providable by the power supply module. The predetermined maximum number may be set such that, when a number of sample container carriers equaling the predetermined maximum number is simultaneously moving on the transport surfaces of the transport modules, the power supply module provides its maximum achievable power or nominal power or slightly less than the maximum achievable power or nominal power.

According to an embodiment, each transport module has a respective maximum value (e.g. 5 to 500) of sample container carriers being simultaneously movable on the respective transport surface by means of the respective electrical drive means. According to an embodiment, the predetermined maximum number is smaller than the sum of the respective maximum values of all transport modules.

According to an embodiment, a maximum electrical power providable by the power supply module is smaller than a sum of the respective electrical power consumed by each transport module when the respective maximum value of sample container carriers is moved on a respective transport module by the respective electrical drive means.

According to an embodiment, a maximum electrical power providable by the power supply module is smaller than a sum of a respective maximum electrical power (nominal power) consumable by each transport module.

According to an embodiment, the number of control devices comprises module control devices assigned to a respective transport module and a single common control device. Each module control device is configured to communicate with the common control device. Each module control device is configured to control the movement of the sample container carriers on the respective transport surface. The common control device is configured to limit the number of simultaneously moving sample container carriers. Each transport module comprises its own module control device which controls movement of the sample container carriers on top of the respective transport surface. The common control device simultaneously ensures that the power consumption requirements as described above are reliably met.

According to an embodiment, the electrical drive means are formed as electro-magnetic actuators being located below the respective transport surface typically in rows and columns and being controllable by a corresponding control device. The sample container carriers each comprise a magnetically active device e.g. in form of a permanent magnet for interaction with a magnetic field generated by the electro-magnetic actuators such that a magnetic drive force is applied to the sample container carriers.

According to an embodiment, the transport modules are arranged such that the transport surfaces of the transport modules form a continuous common transport surface. Thus, the transport modules can interact in order to provide for a large transport surface that is larger than each transport surface of the respective transport modules. However, according to an alternative embodiment, the transport modules can be separate from each other, such that the transport surfaces are not directly connected. A number of connected transport surfaces and a number of non-connected transport surfaces may be provided.

The invention further relates to a laboratory automation system, comprising a number of pre-analytical, analytical and/or post-analytical stations, and a laboratory sample distribution system according to the invention, being adapted to transport the sample container carriers and/or sample containers between the stations.

The stations may be arranged adjacent to the laboratory sample distribution system.

Pre-analytical stations may be adapted to perform any kind of pre-processing of samples, sample containers and/or sample container carriers.

Analytical stations may be adapted to use a sample or part of the sample and a reagent to generate a measuring signal, the measuring signal indicating if and in which concentration, if any, an analyte is existing.

Post-analytical stations may be adapted to perform any kind of post-processing of samples, sample containers and/or sample container carriers.

The pre-analytical, analytical and/or post-analytical stations may comprise at least one of a decapping station, a recapping station, an aliquot station, a centrifugation station, an archiving station, a pipetting station, a sorting station, a tube type identification station, a sample quality determining station, an add-on buffer station, a liquid level detection station, and a sealing/desealing station.

### Brief description of the drawing

The invention will be described in detail with regard to the.

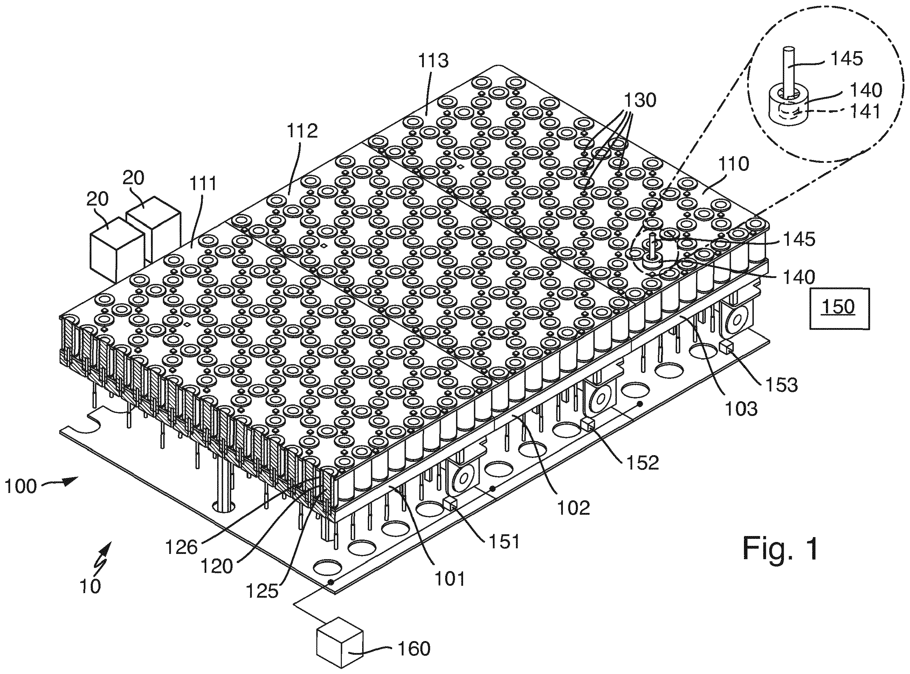

- Fig. 1: shows a laboratory automation system according to an embodiment of the invention.

### Detailed description of the embodiment

Fig. 1 shows a laboratory automation system 10 comprising a laboratory sample distribution system 100 and a two laboratory stations 20, which may be embodied as pre-analytical, analytical and/or post-analytical stations 20. The stations 20 are arranged adjacent to the laboratory sample distribution system 100. Self-evidently, more than the two stations 20 depicted in fig. 1 may be comprised in the laboratory automation system 10.

The laboratory sample distribution system 100 comprises a first transport module 101, a second transport module 102, and a third transport module 103. The transport modules 101, 102, 103 are positioned adjacent to each other.

The first transport module 101 comprises a first transport surface 111, the second transport module 102 comprises a second transport surface 112 and the third transport module 103 comprises a third transport surface 113. As the three transport modules 101, 102, 103 are positioned adjacent to each other, the three transport surfaces 111, 112, 113 form a common transport surface 110.

Under a respective transport surface 111, 112, 113 a plurality of electrical drive means or electro-magnetic actuators in form of electromagnets 120 are positioned in rows and columns. The electrical drive means 120 are implemented as solenoids having a solid ferromagnetic core 125 and a coil 126 surrounding the ferromagnetic core 125.

Sample container carriers 140 comprising magnetically active devices 141 are positioned on the common transport surface 110 and can be moved by means of the electrical drive means or electromagnets 120. While it should be understood that a plurality of sample container carriers 140 can be positioned on the common transport surface 110, due to simplicity only one sample container carrier 140 is depicted in fig. 1. The sample container carrier 140 holds a sample container 145, in which a sample to be analyzed can be contained.

Each sample container carrier 140 comprises a magnetically active device 141 in form of a permanent magnet being positioned inside the respective sample container carrier 140. The magnetically active device 141 or permanent magnet is adapted to interact with electromagnetic fields generated by the electromagnets 120 for moving the sample container carrier 140 over the common transport plane 110.

The laboratory sample distribution system 100 is adapted to transport the sample container carriers 140 and/or the sample containers 145 between the laboratory stations 20. The laboratory stations 20 are positioned adjacent to the transport surface 110 such that a sample container carrier 140 can be used to transport a sample contained in the sample container 145 to a respective laboratory station 20.

A plurality of position sensors 130 is arranged such that positions of respective sample container carriers 140 on the transport surface 110 (111, 112, 113) can be detected.

The position sensors 130 may be embodied as Hall-sensors. Alternatively, the position sensors 130 may have a respective sensing region and an electrical resistance, wherein the electrical resistance is dependent on a position of a sample container carrier 140 on the transport surfaces 111, 112, 113 located in the respective sensing region. The control devices 150, 151, 152, 153 may be adapted to determine the positions of the sample container carriers 140 on top of the transport surfaces 111, 112, 113 by evaluating the electrical resistances of the position sensors 130.

Each of the transport modules 101, 102, 103 comprises a respective module control device 151, 152, 153. Each of the module control devices 151, 152, 153 is configured to control movement of sample container carriers 140 on the respective transport module 101, 102, 103. For example each module control device 151, 152, 153 is configured to control movement of the sample container carriers 140 on the respective transport surface 111, 112, 113 by driving the electromagnets 120 such that the sample container carriers 140 independently and simultaneously move along corresponding transport paths.

Each transport module 101, 102, 103 has the ability to move a respective maximum value of sample container carriers 140 simultaneously on its respective transport surface 111, 112, 113. It is evident that a respective transport module 101, 102, 103 consumes more electrical power if more sample container carriers 140 move simultaneously on its respective transport surface 111,112,113.

The laboratory sample distribution system 100 further comprises a common control device 150 which is in communication connection with the module control devices 151, 152, 153. For simplicity, this communication connection is not shown. Especially, the module control devices 151, 152, 153 continuously report to the common control device 150 how many sample container carriers 140 are currently moving or a planned to move on the respective transport surface 111, 112, 113 of each transport module 101, 102, 103.

The laboratory sample distribution system 100 further comprises a power supply module 160 which is adapted to deliver electric power to the transport modules 101, 102, 103. The power supply module 160 is dimensioned such that it is not able to deliver enough electrical power in order to supply all three transport modules 101, 102, 103 if the respective maximum value of sample container carriers 140 is moving simultaneously on all three transport surfaces 111, 112,113.

In order to avoid problems due to this dimensioning, a predetermined maximum number is configured in the common control device 150, which is the maximum cumulative number of sample container carriers 140 that are allowed to move simultaneously anywhere on the common transport surface 110 taking into account the limited nominal power supply capabilities of the power supply module 160.

The common control device 150 permanently sums all values of sample container carriers 140 moving on the common transport surface 110 and compares this sum with the predetermined maximum number of sample container carriers 140 that are allowed to move simultaneously. In case this predetermined maximum number is reached, it transmits a message to the module control devices 151, 152, 153 that no further sample container carrier 140 can start to move. Only if the sum, at a subsequent calculation, is lower than the predetermined maximum number, the common control unit transmits a further signal to the module control devices 151, 152, 153, this message indicating that a further sample container carrier 140 can start to move.

By means of the described implementation, it is ensured that the maximum nominal power that can be supplied by the power supply module 160 is sufficient for operation of the laboratory sample distribution system 100 in all cases. As there are in practice only very few cases in which the predetermined maximum number of sample container carriers 140 should be exceeded, operation of the laboratory sample distribution system 100 is not significantly deteriorated by the of the power supply module 160. However, costs can be significantly reduced if a smaller power supply module 160 can be used.

## Claims

1. Laboratory sample distribution system (100), comprising
- a number of sample container carriers (140),
- a number of transport modules (101, 102, 103), wherein each transport module (101, 102, 103) comprises
- a transport surface (111, 112, 113) being adapted to carry the sample container carriers (140), and
- electrical drive means (120) being adapted to move the sample container carriers (140) on top of the transport surface (111, 112, 113),
- a power supply module (160) being adapted to provide electrical power to the transport modules (101, 102, 103), and
- a number of control devices (150, 151, 152, 153),
- wherein at least one of the control devices (150, 151, 152, 153) is configured to control the movement of the sample container carriers (140) on top of the transport surfaces (111, 112, 113) by driving the electrical drive means (120) such that the sample container carriers (140) move along corresponding transport paths, and
- wherein at least one of the control devices (150, 151, 152, 153) is configured to limit the number of simultaneously moving sample container carriers (140) to a predetermined maximum number.

2. Laboratory sample distribution system (100) according to claim 1, **characterized in that**
- the predetermined maximum number is set according to a maximum electrical power providable by the power supply module (160).

3. Laboratory sample distribution system (100) according to one of the preceding claims, **characterized in that**
- each transport module (101, 102, 103) has a respective maximum value of sample container carriers (140) being simultaneously movable on the respective transport surface (110) by the respective electrical drive means (120).

4. Laboratory sample distribution system (100) according to claim 3, **characterized in that**
- the predetermined maximum number is smaller than the sum of the respective maximum values of all transport modules (101, 102, 103).

5. Laboratory sample distribution system (100) according to claim 3 or 4, **characterized in that**
- a maximum electrical power providable by the power supply module (160) is smaller than a sum of the respective electrical power consumed by each transport module (101, 102, 103) when the respective maximum value of sample container carriers (140) is moved on each transport module (101, 102, 103) by the respective electrical drive means (120).

6. Laboratory sample distribution system (100) according to one of the preceding claims, **characterized in that**
- a maximum electrical power providable by the power supply module (160) is smaller than a sum of a respective maximum electrical power consumable by each transport module (101, 102, 103).

7. Laboratory sample distribution system (100) according to one of the preceding claims, **characterized in that**
- the number of control devices (150, 151, 152, 153) comprises module control devices (151, 152, 153) assigned to a respective transport module (101, 102, 103) and a common control device (150),
- wherein each module control device (151, 152, 153) is configured to communicate with the common control device (150),
- wherein each module control device (151, 152, 153) is configured to control the movement of the sample container carriers (140) on the respective transport surface (111, 112, 113), and
- wherein the common control device (150) is configured to limit the number of simultaneously moving sample container carriers (140) to the predetermined maximum number.

8. Laboratory sample distribution system according to one of the preceding claims, **characterized in that**
- the electrical drive means (120) are formed as electromagnetic actuators being arranged below the respective transport surface (111, 112, 113),
- wherein the sample container carriers (140) each comprise a magnetically active device (141) for interaction with a magnetic field generated by the electromagnetic actuators such that a magnetic drive force is applied to the sample container carriers (140).

9. Laboratory sample distribution system (100) according to one of the preceding claims, **characterized in that**
- the transport modules (101, 102, 103) are arranged such that the transport surfaces (111, 112, 113) of the transport modules (101, 102, 103) form a continuous common transport surface (110).

10. Laboratory automation system (10), comprising:
- a number of a pre-analytical, analytical and/or post-analytical stations (20), and
- a laboratory sample distribution system (100) according to one of the preceding claims being adapted to transport the sample container carriers (140) and/or sample containers (145) between the stations (20).
